# EUROPEAN PATENT SPECIFICATION

(11) **EP 0 371 358 B1**
(45) Date of publication and mention of the grant of the patent: **19.01.1994**
(21) Application number: 89121330.8
(22) Date of filing: 17.11.1989
(51) Int. Cl.: H04B 7/26

(54) **Time delay compensation in a radio transceiver**
Verzögerungszeitausgleich in einem Funk-Sender-Empfänger
Compensation du temps de retard dans un émetteur-récepteur radio

(30) Priority: 28.11.1988 GB 8827733
(43) Date of publication of application: 06.06.1990
(73) Proprietor: MOTOROLA A/S, 2300 Copenhagen S (DK)
(72) Inventor: Sogaard Rasmussen, Poul Erik, DK-2600 Glostrup (DK)
(74) Representative: Dunlop, Hugh Christopher

(56) References cited:
- US-A- 4 696 052
- THE JOURNAL OF THE INSTITUTION OF ELECTRONIC AND RADIO ENGINEERS, vol. 57, no. 1, January/February 1987, pages 1-11, London, GB; K.R. THROWER: "Mobile radio possibilities"

## Description

This invention relates to a radio transceiver, such as a mobile cellular radio telephone for use on the OEBL-C system. Such a radio comprises a receiver section, a transmitter section, a control unit for controlling timing of transmissions, and means for generating a predetermined signal and feeding it through the transmitter section.

Cellular radio telephone systems demand exact synchronism between received and transmitted data, on the air interface. A mobile radio's logic unit measures the time of arrival of a predefined bit sequence issued from a base station. The predefined bit sequence is generally 34 bits, made up of a Barker code repeated three times, followed by a "1"; hereinafter referred to as the "preamble". The control unit controls the timing of transmissions and signalling sequences, so that an exact 150 millisecond delay between received and transmitted data is achieved. The radio circuits and modulation/demodulation circuits in the RF receiver and transmitter sections introduce a delay to the reception and transmission of bits. The delay is not constant, but depends on such factors as component tolerances, temperature variation and aging.

In the past, a 1-time fixed compensation has been made in the factory, to compensate for these delays. This is costly and unsatisfactory in operation.

It would be desirable to provide a transceiver which provided for compensation for the delay in reception and transmission of bits, which required no factory adjustment and provides improved calibration over the life of the transceiver.

According to the present invention, there is provided means for feeding the signal back through the receiver section, means for measuring the delay in the signal, and means, within the control unit, for advancing the timing of transmissions by an amount corresponding to the measured delay, thereby to compensate for delays in the receiver and transmitter sections.

The predetermined generated signal is preferably the same as the preamble.

Preferably the calibration is initiated at predetermined intervals, for example regular intervals, irrespective of whether 2-way communication is underway or whether the transceiver is in an idle mode awaiting incoming signals.

It is preferred that the means for bringing forward the timing of transmissions are arranged to act on the receiver section, by bringing forward the measured time of receipt of the preamble.

A preferred embodiment of the invention will now be described, by way of example, with reference to the accompanying drawings, in which:
Figure 1 is a block diagram of a mobile radio telephone incorporating the invention, and
Figure 2 illustrates the fine timing aspect of the embodiment of the invention.

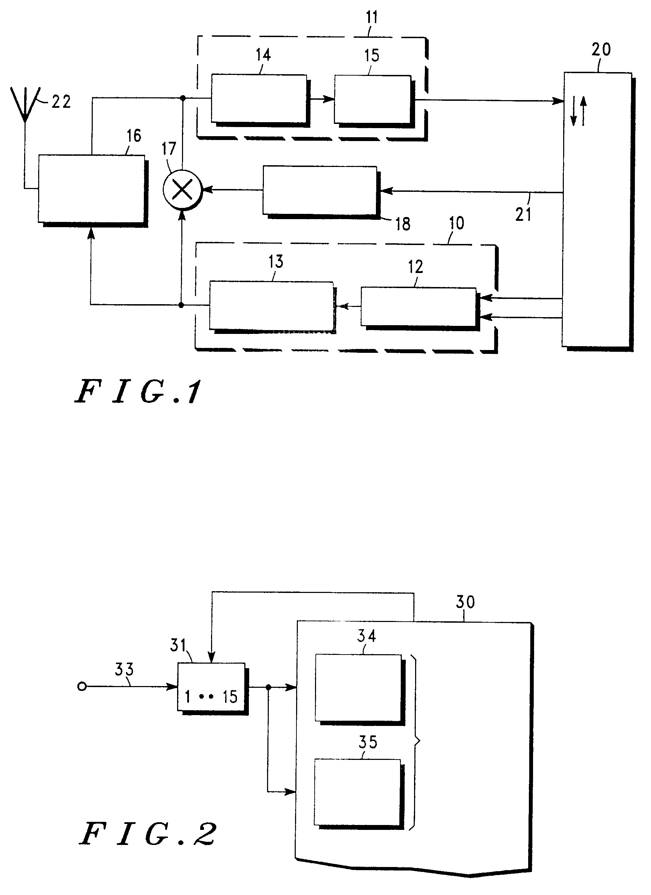

Referring to figure 1, the mobile radio telephone comprises a transmitter section 10 and a receiver section 11. The transmitter section has a modulator 12 and an RF section 13, and the receiver section has an RF section 14 and a demodulator and bit slicer 15. Connected to the RF sections 13 and 14 is a 10 MHz duplex filter 16 and a calibration loop path and mixer 17. Connected to the mixer 17 is a 10 MHz oscillator 18. A logic unit 20 is provided, to receive data from the demodulator and bit slicer 15, and provide data to the modulator 12. The logic unit 20 has a loop enable output 21.

The operation of the apparatus is as follows. In normal operation, a signal modulated with data bits will be received on an antenna 22. After passing the duplex filter 16, the RF receiver section 14 and the demodulator and bit slicer 15, the received data bits will arrive at the logic unit 20. The bit slicer is a level detector, which provides the logic unit with both the data and the time of arrival of the data to a resolution of 90 nanoseconds. A suitable bit slicer is described in EP-A-0 371 357 of Storno A/S, which is incorporated herein by reference. The logic unit 20 receives the data at intervals of 1.5 microseconds.

On the transmission side, the radio telephone supplies data to the modulator 12 and transmits the data (accompanied by timing control signals) where the RF transmitter section 13 and the duplex filter 16.

At certain time intervals, for example every five minutes, the logic unit starts a calibration sequence as follows. A loop enable is provided on output 21, which initiates oscillator 18, and calibration loop path and mixer 17 is opened, to connect the RF transmitter section 13 to the RF receiver section 14. The logic unit 20 generates the preamble code, and the time of arrival of the preamble code at the bit slicer 15 is measured. The input line sourced from the bit slicer is a synchronous input line featuring automatic capture of all bit shift times (positive and negative edges). The microprocessor stores the detected bit shift times. Based on the stored bit shift times, the microprocessor generates a corresponding code and compares this with the known preamble code utilising a correlation analysis algorithm, such as is described in the above referenced patent application. From this, the logic unit 20 calculates the time of arrival for the preamble sequence. Because the logic unit executes the calibration sequence using the usual 34 bit preamble, locally generating that bit sequence, no special method needs to be devised for calculation of time of arrival of the looped-back signal.

The synchronous microprocessor inputs and outputs are related to an internal clock with a resolution of 1.5 microseconds (= microprocessor clock divided by 16). The internal free-running timer (master "watch") of the microprocessor has the same resolution and all input and output timing is related to that watch.

When signalling is to be transmitted, all times are related to that watch: time of arrival for received signal; transmission time for outgoing signalling; measured loop delay. By simple subtraction of the known loop delay, the microprocessor implements the time compensation when deciding start time for transmission.

In order to fill the stringent requirements of cellular radio systems, greater resolution than can be provided by the microprocessor internal clock is necessary. The additional circuitry of figure 2 is therefore added.

Referring to figure 2, there is shown a microprocessor 30 and a fine resolution delay unit 31. There is also shown an input data bus 33 from the bit slicer 15, a high speed input 34 for time capture and an input 35 for fine time capture.

The received data, and the information indicating its time of arrival appears on data bus 33. This data bus gives the time of arrival of the signal to a resolution of 188 nanoseconds. Of this, the four least significant bits are passed to input 35 where they are passed to a time capture register (not shown). This register provides a fine time resolution value. That value is used as a 1/8-fraction sub-specification of the time of arrival of the preamble code, and is included in the calculation of time of arrival by means of the correlation algorithm.

The processor can internally compensate for time errors to a resolution of 1.5 microseconds. Compensation to a finer resolution is implemented by delay unit 31. The four least significant bits of the measured delay are added in delay unit 31 to the signal on bus 33 by a simple addition operation. This has the effect that to the microprocessor 30, it appears that the received signal is delayed by that amount. The time by which delay unit 31 can delay the signal ranges from 0 to 7/8 of the 1.5 microsecond internal microprocessor period. This is the value loaded by the microprocessor on its high speed input. The microprocessor 30 times all its output operations on a high speed output (not shown) from this measured time. Those output operations are executed a whole number of internal clock counts from the time provided on the input.

During the time measurement, a delay of 0 is loaded into delay unit 31.

The time delay unit 31 (and time capture register) can be implemented in software or hardware.

It will, of course, be understood that the above description has been given by way of example only, and that modifications of detail can be made within the scope of the invention.

## Claims

1. A radio transceiver comprising a receiver section (11), a transmitter section (10), a control unit (20, 30) for controlling timing of transmissions, and means (20) for generating a predetermined signal and feeding it through the transmitter section (10), characterised by:
means (17) for feeding the predetermined signal back through the receiver section (11), means (20, 30, 31, 34, 35) for measuring the delay in the signal, and means, within the control unit (20, 30), for advancing the timing of transmissions by an amount corresponding to the measured delay, thereby to compensate for delays in the receiver (11) and transmitter (10) sections.

2. A transceiver according to claim 1, further comprising means (20, 30) for searching for a predetermined code in radio signals received, and means for measuring the timing of that code and controlling timing of subsequent transmissions dependent thereon, wherein the means (20) for generating the predetermined signal are arranged to generate said predetermined code.

3. A transceiver according to claim 1 further comprising means (20) for initiating the predetermined signal generation, delay measurement and delay compensation at predetermined intervals, irrespective of whether two-way communication is under way or whether the transceiver is in an idle mode awaiting incoming signals.

4. A transceiver according to claim 1, comprising timing means (20, 30, 31, 34, 35) for measuring the timing of a received code and control means (20, 30) for controlling timing of subsequent transmissions dependent thereon, wherein the means for bringing forward the timing of transmissions are arranged to bring forward the time of receipt of the received code, as measured by the timing means (20, 30, 31, 34, 35).

5. A transceiver according to claim 1, wherein the control unit (20, 30) is operable to control the timing of transmissions to a resolution of a predetermined minimum period, and fine resolution timing means are provided comprising:
a clock having a clock period which is substantially less than said predetermined minimum period, delay means arranged to set a delay time equal to a variable number of periods of the clock and means for delaying operations of the control unit by said delay time, thereby to achieve control of timing of transmissions to a resolution greater than said predetermined minimum period.

## Patentansprüche

1. Funk-Sende-Empfänger, umfassend einen Empfängerteil (11), einen Sanderteil (10), eine Steuereinheit (20, 30), um den Zeitpunkt der Sendungen zu steuern, und eine Einrichtung (20), um ein vorbestimmtes Signal zu erzeugen und es durch den Senderteil (10) zu führen, gekennzeichnet durch;
eine Einrichtung (17), um das vorbestimmte Signal durch den Empfängerteil (11) zurückzuführen, Einrichtungen (20, 30, 31, 34, 35), um die Verzögerung in dem Signal zu messen, und eine Einrichtung innerhalb der Steuereinheit (20, 30), um den Zeitpunkt der Sendungen um einen Betrag vorzuschieben, der der gemessenen Verzögerung entspricht, um dadurch Verzögerungen in dem Empfängerteil (11) und in dem Senderteil (10) auszugleichen.

2. Sende-Empfänger nach Anspruch 1, weiter umfassend eine Einrichtung (20, 30), um nach einem vorbestimmten Code in empfangenen Funksignalan zu suchen, und eine Einrichtung, um den Zeitpunkt dieses Codes zu messen und um den Zeitpunkt davon abhängender, nachfolgender Sendungen zu steuern, worin die Einrichtung (20) zum Erzeugen des vorbestimmten Signals eingerichtet ist, diesen vorbestimmten Code zu erzeugen.

3. Sende-Empfänger nach Anspruch 1, weiter umfassend eine Einrichtung (20), um die vorbestimmte Signalerzeugung, die Verzögerungsmessung und den Verzögerungsausgleich in vorbestimmten Intervallen ungeachtet, ob eine Zweiweg-Kommunikation im Gange ist oder ob der Sende-Empfänger in einem Leerlaufbetrieb ist und ankommende Signale erwartet, einzuleiten.

4. Sonde-Empfänger nach Anspruch 1, umfassend eine Zeitmeßeinrichtung (20, 30, 31, 34, 35), um den Zeitpunkt eines empfangenen Codes zu messen, und eine Einrichtung (20, 30), um den Zeitpunkt davon abhängender, nachfolgender Sendungen zu steuern, worin die Einrichtung zum Vorwärtsbringen des Zeitpunkts der Sendungen eingerichtet ist, die Empfangszeit des empfangenen Codes vorwärtszubringen, wie durch die Zeitmeßeinrichtung (20, 30, 31, 34, 35) gemessen.

5. Sende-Empfänger nach Anspruch 1, worin die Steuereinheit (20, 30) betriebsfähig ist, den Zeitpunkt der Sendungen mit einer Auflösung von einer vorbestimmen Minimaldauer zu steuern, und worin eine feinauflösende Zeitbestimmungseinrichtung vorgesehen ist, die umfaßt;
einen Takt mit einer Taktdauer, die wesentlich kleiner ist als die vorbestimmte Minimaldauer, eine Verzögerungseinrichtung, eingerichtet, um eine Verzögerungsszeit einzustellen, die gleich einer variablen Zahl von Perioden des Takts ist, und eine Einrichtung, um Funktionen der Steuereinheit um diese Verzögerungsszeit zu verzögern, um dadurch eine Steuerung des Zeitpunkts der Sendungen mit einer Auflösung zu erreichen, die größer ist als die vorbestimmte Minimaldauer.

## Revendications

1. Emetteur-récepteur radio comprenant une section récepteur (11), un section émetteur (10), une unité de commande (20, 30) servant à commander le positionnement temporel des émissions et un moyen (20 ) servant à produire un signal prédéterminé et à l'envoyer via la section émetteur (10), caractérise par :
un moyen servant à renvoyer en retour le signal prédéterminé via la section récepteur (11), un moyen (20, 30, 31, 34, 35) servant à mesurer le retard présent dans le signal, et un moyen, contenu à l'intérieur de l'unité de commande (20, 30), servant à faire avancer le positionnement temporel des émissions d'une quantité correpondant au retard mesuré, de maière à compenser les retards existant dans les sections récepteur (11 ) et émetteur (10).

2. Emetteur-récepteur selon la revendication 1, comprenant en outre un moyen (20, 30) servant à rechercher un code prédéterminé dans les signaux radio reçus, et un moyen servant à mesurer le positionnement temporel de ce code et à commander le positionnement temporel d'émissions ultérieures en fonction de celui-ci, où le moyen (20) servant à produire le signal prédéterminé est destiné à produire ledit code prédéterminé.

3. Emetteur-récepteur selon la revendication 1, comprenant en outre un moyen (20) servant à faire commencer la production du signal prédéterminé, la mesure du retard et la compensation du retard à intervalles prédéterminés, indépendamment du fait qu'une communication bidirectionelle est en cours ou que l'émetteur est dans un mode d'inactivité et attend des signaux entrants.

4. Emetteur-récepteur selon la revendication 1, comprenant un moyen de synchronisation (20, 30, 31, 34, 35) servant à mesurer le positionnement temporel d'un code reçu et un moyen de commande (20, 30) servant à commander temporel d'émissions ultérieures en fonction de celui-ci, où le moyen servant à faire avancer le positionnement temporel des émissions est conçu pour faire avancer le temps de réception du code reçu, tel que mesuré par le moyen de synchronisation (20, 30, 31, 34, 35).

5. Emetteur-récepteur selon la revendication 1, où l'unité de commande (20, 30) a pour fonction de commander le positionnement des émissions avec une résolution correspondant à une durée minimale prédéterminée, et un moyen de synchronisation à résolution fine est prévue, qui comprend:
une horloge possédant une période d'horloge qui est sensiblement inférieure à ladite durée minimale prédéterminé un moyen retardateur destiné à fixer un temps de retard égal à un nombre variable de périodes de l'horloge, et un moyen servant à retarder dudit temps de retard les opérations de l'unité de commande, de manière à obtenir une commande du positionnement temporel des émissions avec une résolution plus grande que ladite durée minimale prédéterminée.
